# EUROPÄISCHE PATENTANMELDUNG

(11) **EP 0 901 988 A1**
(43) Veröffentlichungstag der Anmeldung: **17.03.1999**
(21) Anmeldenummer: 97114815.0
(22) Anmeldetag: 27.08.1997
(51) Int. Cl.: C02F 1/44, B01D 61/02, B05B 15/12

(54) **Verfahren zur Aufbereitung des Umlaufwassers aus Spritzkabinen mit Nassauswaschung**

(71) Anmelder: PPG Industries Lacke GmbH, 42329 Wuppertal (DE)
(72) Erfinder: Kascha, Dieter, 65760 Eschborn 2 (DE); Manderscheid, Karl, 50935 Köln (DE); Lindemann, Johannes Dr., 53619 Rheinbreitbach (DE)
(74) Vertreter: Patentanwälte Sternagel & Fleischer

(57) **Zusammenfassung**

Die vorliegende Erfindung betrifft ein Verfahren zur Aufbereitung des Umlaufwassers aus Spritzkabinen (1) mit Naßauswaschung durch:
- (a): Zuführen eines Teils des Umlaufwassers zu einer Umkehrosmosestufe (11),
- (b): Auftrennen des Umlaufwassers in ein Retentat und in ein Permeat in der Umkehrosmosestufe (11),
- (c): Auftrennen des Retentats aus der Umkehrosmose (11) in einer Verdampfereinheit (12) in einen Feststoffanteil und in einen flüchtigen Anteil,
- (d): Kondensieren des flüchtigen Anteils aus Stufe (c),
- (e): Verwertung des Permeats aus Stufe (b), des Feststoffanteils aus Stufe (c) und des Kondensats aus Stufe (d).

## Beschreibung

Die vorliegende Erfindung betrifft ein Verfahren zur Aufbereitung des Umlaufwassers aus Spritzkabinen mit Naßauswaschungen sowie ein Verfahren zur Kreislaufführung des Wassers aus Spritzkabinen mit Naßauswaschung.

In modernen Lackierstraßen zur Lackierung von Automobilkarosserien werden Spritzkabinen mit Naßabscheidung des anfallenden Oversprays eingesetzt. Durch Versprühen von Wasser wird innerhalb der Spritzkabine ein feinverteilter Wassernebel erzeugt, der die Lackbestandteile des Oversprays aufnimmt und aufgrund des in der Spritzkabine herrschenden Unterdrucks aus der Kabine austrägt. In den nachgeschalteten Wasserabscheidern wird dann das mit Lackbestandteilen beladene Wasser aufgefangen. Aufgrund der heute gültigen Abwassergesetzgebung muß das Spritzkabinenwasser im Kreislauf geführt werden.

In einem gängigen in der Industrie eingesetzten Verfahren zur Kreislaufführung des Wassers aus Spritzkabinen mit Naßuswaschung wird das Wasser aus dem Abscheider einem Systemtank zugeführt. Dort findet eine Trennung, vorzugsweise durch Flotation der abgeschiedenen und koagulierten Lackbestandteilen statt, wodurch sich die Lackbestandteile im oberen Bereich des Tanks ansammeln. Alternativ kann diese Trennung auch durch Sedimentation, entweder direkt im Systemtank oder in einem Teilstrom , erfolgen. Im oben beschriebenen Verfahren ist das Wasser im unteren Bereich des Tanks im wesentlichen frei von festen Lackbestandteilen und wird im unteren Bereich aus dem Systemtank abgezogen, mit Koaguliermittel versetzt und wieder der Spritzkabine zugeführt. Im oberen Bereich des Systemtanks wird an die mit den koagulierten Lackbestandteilen angereicherte Wasserfraktion abgezogen und einer Fest-Flüssig-Trenneinheit vorzugsweise einer Flotationseinheit zugeführt. Das hierbei anfallende im wesentlichen von den Lackbestandteilen befreite Wasser wird in den Systemtank zurückgeführt. Auf diese Art und Weise kann zwar das Spritzkabinenwasser im wesentlichen von koagulierbaren Lackbestandteilen befreit werden, aufgrund der Kreislaufführung entsteht aber eine stetige Aufkonzentrierung aller gelösten Inhaltsstoffe, wie z.B. Salze und wasserlösliche Lackbestandteile und kolloidale nicht koagulierbare Lackbestandteile. Diese Aufkonzentrierung führt zum einem zu Korrosionsproblemen als auch zu Emissionsproblemen. Dies ist insbesondere darauf zurückzuführen, daß aufgrund des Unterdrucks in der Spritzkabine und der Feinverteilung des Wassernebels sowohl ein Teil des mit Salz beladenen Wassers als auch insbesondere leicht flüchtige organische Verbindungen in die Abluft gelangen, wobei insbesondere das mitgerissene Salz zu Korrosionsproblemen in den Abluftsystemen führt. Zusätzlich kann die stetige Aufkonzentrierung von löslichen und kolloidalen organischen Bestandteilen zu einer biologischen Kontamination des Umlaufwassers führen, die Fäulnisprozesse und damit verbundene Geruchsentwicklung bewirkt. Dies bedeutet in der Praxis, daß in gewissen zeitlichen Abständen, in der Regel zweimal jährlich, das Umlaufwasser vollständig ausgetauscht werden muß. Die Einschränkung der Umlaufwasserstandzeiten ergeben sich aus den hohen Verdunstungsverlusten an Umlaufwasser (z.B. bis zu 15% pro Tag bezogen auf Systemvolumen), die dann durch Zugabe von reinem Wasser ausgeglichen werden müssen. Daher hat man auch versucht, die oben beschriebenen Probleme durch Verwendung immer hochwertigerer Zusatzwasserqualitäten zu verringern. Diese hohen Zusatzwasserqualitäten erhöhen aber in beträchtlicher Weise die Betriebskosten der Anlage. Außerdem konnten dadurch die Zeitintervalle bis zum Austausch des gesamten Spritzkabinenumlaufwassers nur geringfügig verlängert werden. Das eigentliche Problem der Aufkonzentrierung wird hierdurch aber nicht gelöst. Ein Austausch des Spritzkabinenumlaufwassers in regelmäßigen Abständen ist nach wie vor notwendig. Diese Lackabwässer werden heute entweder durch Aufbereitung in den Abwasseranlagen oder durch Verbrennung entsorgt. Beides sind kostspielige Verfahrensweisen und führen auch zu zusätzlichen Emissionen, die aus Umweltschutzgründen vermieden werden sollten.

Es besteht daher ein Bedürfnis, in der Industrie nach sowohl einem Verfahren zur Aufbereitung von Spritzkabinenumlaufwässern als auch zur Kreislaufführung der Spritzkabinenwässer, bei denen das Problem der Aufkonzentrierung unerwünschter Stoffe im Spritzkabinenumlaufwasser gelöst wird und bei denen sowohl die Aufbereitungskosten als auch die Emission von Schadstoffen so niedrig wie möglich sind.

Aus EP-A-0 675 080 ist ein Verfahren zur Aufkonzentration des in Spritzkabinen mit Naßauswaschung anfallenden Oversprays durch eine mehrstufige Membranfiltration bekannt. Hierbei wird das aufzukonzentrierende Kabinenwasser/Overspraygemisch in einer Ultrafiltrationsstufe vorkonzentriert, indem man es in ein Retentat und ein niedermolekulare Bestandteile enthaltendes Permeat auftrennt. Das Ultrafiltrationspermeat wird zusammen mit einem Nanofiltrationspermeat einer Umkehrosmosestufe zugeführt. Das Retentat der Umkehrosmose und das Retentat der Ultrafiltration werden einer Nanofiltrationsstufe zugeführt, wo eine Auftrennung in ein Retentat und ein Permeat erfolgt. Das Retentat der Nanofiltration entspricht weitgehend bezüglich Konzentration und Lackzusammensetzung dem eingesetzten Wasserlack und kann daher hierfür direkt oder als Bestandteil einer Lackzusammensetzung verwendet werden. Das Permeat der Umkehrosmose kann in den Kabinenwasserkreislauf zurückgeführt werden.

Der wesentliche Punkt dieses Verfahrens liegt darin, daß auch die niedermolekularen Bestandteile des Lacks, wie z.B. Vernetzungsmittel, abgetrennt werden und in das aufkonzentrierte Retentat der Ultrafiltration zurückgeführt werden. Letztendlich findet bei diesem Verfahren die Aufkonzentration der Lackbestandteile des Kabinenwasseroverspraygemisches und der Abtrennung von Wasser statt. Insbesondere tritt aber bei diesem Verfahren das Problem auf, daß Inhaltsstoffe, die die Nanofiltration passieren, aber in der Umkehrosmose zurückgehalten werden, in diesem Verfahren im Kreislauf geführt werden, so daß hier auch eine unerwünschte Aufkonzentration erfolgt. Dies betrifft insbesondere die organischen Bestandteile, so daß auch hier mit den oben beschriebenen Problemen zu rechnen ist. Da das in EP-A-675 080 beschriebene Verfahren einen anderen Weg der Lackaufbereitung beschreitet, läßt es sich nicht ohne weiteres in bestehende Verfahren zur Kreislaufführung des Spritzkabinenwassers integrieren. Somit sind zusätzlich zu den oben beschriebenen Nachteilen dieses Verfahrens erhebliche Investitionskosten notwendig, um bestehende Lackieranlagen auf das in EP-A-675 080 beschriebene Verfahren umzustellen.

Aufgabe der vorliegenden Erfindung ist es daher, ein Verfahren zur kostengünstigen Aufbereitung des Umlaufwassers aus Spritzkabinen mit Naßauswaschung zur Verfügung zu stellen, mit dem eine umweltverträgliche Verwertung verbrauchter Spritzkabinenumlaufwässer möglich ist und das insbesondere einfach in bestehende Verfahren zur Kreislaufführung des Wassers aus Spritzkabinen mit Naßauswaschung integriert werden kann, um die Aufkonzentration von unerwünschten Bestandteilen des Umlaufwassers zu verhindern.

Diese Aufgabe wird gelöst durch ein Verfahren zur Aufbereitung des Umlaufwassers aus Spritzkabinen mit Naßauswaschung durch:
A Zuführen zumindest eines Teils des Umlaufwassers zu einer Umkehrosmosestufe,
B Auftrennen des Umlaufwassers in ein Retentat und ein Permeat in der Umkehrosmosestufe,
C Auftrennen des Retentats aus der Umkehrosmose in einer Verdampfereinheit in einen Feststoffanteil und in einen flüchtigen Anteil,
D Kondensieren des flüchtigen Anteils aus Stufe C.
E Verwerten des Permeats aus Stufe B des Feststoffanteils aus Stufe C und des Kondensats aus Stufe D.

In einer bevorzugten Ausführungsform der vorliegenden Erfindung werden das Permeat in der Umkehrosmose und das Kondensat aus der Verdampferstufe zusammengeführt und gemeinsam verwertet, vorzugsweise in den Umlaufwasserkreislauf zurückgeführt.

Alternativ kann auch das Permeat der Umkehrosmose allein in den Umlaufwasserkreislauf zurückgeführt werden und das Kondensat aus der Verdampferstufe getrennt davon verwertet werden. Mit diesem Verfahren ist eine Aufkonzentrierung der Inhaltsstoffe des Umlaufwassers auf ein Minimum an Volumen und Maximum an stofflicher Konzentration mittels Umkehrosmose möglich. Entsprechend des erfindungsgemäßen Verfahrens kann mit Hilfe der Umkehrosmose eine Aufkonzentrierung des Retentats bis zu einem Gehalt an gelösten bzw. kolloiden Inhaltsstoffen von bis zu 25 Gew.-%, bei einer mehrstufigen Verfahrensführung von bis zu 50 Gew.-% erreicht werden. Aufgrund des geringen Wasseranteils im Retentat der Umkehrosmosestufe können die nicht flüchtigen Inhaltsstoffe in der nachgeschalteten Verdampfereinheit mit geringem Energie- und somit geringem Kostenaufwand abgetrennt werden.

Bei der erfindungsgemäßen Umkehrosmose handelt es sich um ein Membrantrennverfahren, bei dem Membranen verwendet werden, die Kochsalz zu mindestens 95 Gew.-%, vorzugsweise zu mindestens 98 Gew.-%, bevorzugter zu mindestens 99 Gew.-% zurückhalten. Die transmembrane Druckdifferenz liegt üblicherweise zwischen 15 und 100 bar, vorzugsweise zwischen 20 und 60 bar und bevorzugter zwischen 20 und 50 bar. Dabei wird ein Permeatfluß von 3 bis 10 l/m² h erreicht.

Für die Umkehrosmose sind gängige Membranmodule, wie Spiralwickel-, Rohr-, Kapillar- und Hohlfasermodule geeignet. Die Membranen können aus Polyacrylnitril, Polyolefin wie Polypropylene oder Polyethylen, porösem Kohlenstoff, Polyharnstoff, aromatischen oder aliphatischen Polyamiden, sulfonierten Polyarylethern, Polyfuran, Polybenzimidazol, verschiedenen Fluorpolymeren, Polyetheraromaten, wie Polyimid oder Polyimidazolpyrrolidon, oder ähnlichen Materialien hergestellt sein. Das geeignete Membranmaterial ist entsprechend der im Umlaufwasser enthaltenen Lösemitteln auszuwählen, wobei die Beständigkeit gegenüber diesen Lösemitteln zu beachten ist. Als besonders geeignet haben sich Polyamidmembranen erwiesen.

Mit einer solchen erfindungsgemäßen Umkehrosmosestufe kann ein Permeat erhalten werden, das im wesentlichen frei von gelösten Stoffen ist. Unter im "wesentlichen frei" wird im Sinne der vorliegenden eine Konzentration an gelösten Stoffen im Umkehrosmosepermeat von weniger als 0,2 Gew.-%, bezogen auf die Gesamtmasse des Permeats, vorzugsweise von weniger als 0.1 Gew.-%, bevorzugter von weniger als 0,05 Gew.-% und am bevorzugtesten von weniger als 0,01 Gew.-% verstanden. Die Trennwirkung kann falls erforderlich durch ein mehrstufiges Umkehrosmoseverfahren noch verbessert werden.

In einer vorteilhaften Ausführungsform des erfindungsgemäßen Verfahrens wird der Umkehrosmosestufe eine Filtrationsstufe vorgeschaltet, in der das Umlaufwasser in ein Retentat und in ein Permeat aufgetrennt wird und das Permeat der Umkehrosmosestufe zugeführt wird. Vorteilhafterweise wird hierzu ein Partikelfiltrationsverfahren, vorzugsweise ein dynamisches Membranfiltrationsverfahren mit einer porösen Mikrofiltrationsmembran mit einer Porengröße von 0,05 - 5 µm, vorzugsweise von 0,1 -0,2 µm verwendet, die als Schutzfilter für die nachgeschaltete Umkehrosmose die dispers vorliegenden Inhaltsstoffe aus dem Umlaufwasser entfernt.

In einer alternativen Ausführungsform kann als Schutzfilter eine Ultrafiltrationsstufe verwendet werden. Bei der Ultrafiltration im Sinne der vorliegenden Erfindung handelt es sich ebenfalls um ein Membrantrennverfahren, das mit Membranen mit einer Auschlußgrenze von 200 bis 500.000 Da, vorzugsweise von 1000 bis 250.000 Da durchgeführt werden kann. Die Druckdifferenz zwischen Ein- und Ausgang des Moduls bei der erfindungsgemäßen Ultrafiltration beträgt dabei 0,5 bis 5 bar, vorzugsweise unter 1 bar. Mit dieser Betriebsweise kann ein Permeatfluß von 10 bis 80 l/m² h, vorzugsweise 15 bis 50 l/m² h erreicht werden. Die transmembrane Druckdifferenz beträgt bei der Ultrafiltration zwischen 1 bis 5 bar.

Für die beim erfindungsgemäßen Verfahren zum Einsatz gelangende Mikro- oder Ultrafiltrationseinheit sind alle marktüblichen Membranmodule geeignet, wie Kissen-, Platten-, Spiralwickel-, Rohr-, Kapillar-, Multikanal- oder Hohlfasermodule. Als Membranmaterialien können die bereits im Zusammenhang mit der Umkehrosmoseeinheit beschriebenen Materialien verwendet werden. Zusätzlich kommt noch Teflon und Keramik (wie z.B. Siliciumcarbid und Aluminiumoxid) als Membranmaterial in Betracht. Dem Fachmann auf dem hier einschlägigen Gebiet ist bekannt, wie er für das jeweilige Trennproblem die geeignete Ultrafiltrationseinheit auswählt. Als besonders geeignet für die erfindungsgemäße Ultrafiltrationsstufe haben sich Multikanal- oder Rohrmodule mit Aluminiumoxid-, Siliciumcarbid-, Polyvinylidenfluorid- und Polyacrylnitrilmembranen erwiesen.

Ein besonderer Vorteil des oben beschriebenen Verfahrens liegt darin, daß es einfach in bereits bestehende Verfahren zur Kreislaufführung des Wassers aus Spritzkabinen mit Naßauswaschungen integriert werden kann. Daher wird durch Integration des oben beschriebenen Verfahrens ein Verfahren zur Kreislaufführung des Wassers aus Spritzkabinen mit Naßauswaschung bereitgestellt durch:
A Zuführen des mit koagulierten Lackbestandteilen, nicht koagulierbaren organischen Bestandteilen und Salzen beladenen Wassers aus der Spritzkabine in einen Systemtank,
B Ableiten eines Gemisches von Wasser und koagulierter Lackbestandteile aus dem Systemtank in eine Fest-Flüssig-Trenneinheit,
C Zurückführen einer Wasserfraktion, die im wesentlichen frei von koagulierten Lackbestandteilen ist, aus dem Systemtank in die Spritzkabine.
wobei dann die wäßrige Phase aus der Fest-Flüssig-Trenneinheit zumindest teilweise dem oben beschriebenen Verfahren in seinen verschiedenen Ausführungsformen unterzogen wird. Das Permeat der Umkehrosmose und/oder das Kondensat aus der Verdampfereinheit wird dann in den Systemtank zurückgeführt.

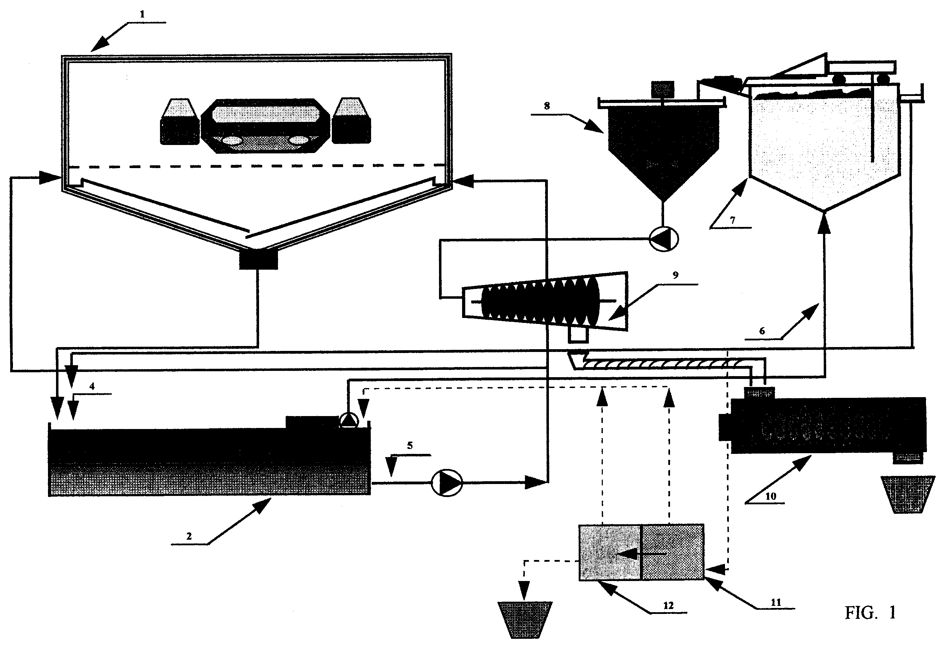

Das Prinzip des erfindungsgemäßen Verfahrens integriert in ein Verfahren zur Kreislaufführung des Spritzkabinenumlaufwassers ist in Figur 1 dargestellt.

In der Figur 1 ist eine übliche Spritzkabine 1 mit Naßauswaschung dargestellt, aus der das mit Lackbestandteilen beladene Wasser in einen Systemtank 2 geleitet wird. In dem Systemtank 2 wird in der wäßrigen Phase zusätzlich ein Entschäumer 4 zugesetzt. In dem Systemtank 2 schwimmen die koagulierten Lackbestandteile auf und werden mit einer Absaugeinrichtung 3 aus dem Systemtank 2 entfernt. Das Gemisch aus Wasser und koagulierten Lackbestandteilen wird dann einer Flotationseinheit 7 nach Zugabe eines Flotationsmittels 6 zugeführt. Der in der Flotationseinheit 7 anfallende Lackschlamm wird in üblicher Weise durch Leiten über einen Schlammpuffer 8 und einen Dekanter 9 in einen Trockner 10 geführt und schließlich aus dem System ausgetragen. Die wäßrige Phase aus der Flotationseinheit 7 wird zumindest teilweise einem Trennverfahren gemäß der vorliegenden Erfindung zugeführt. Diese Phase wird zuerst über eine Mikrofiltrationseinheit (nicht dargestellt) geleitet, wobei das Retentat der Mikrofiltrationseinheit wieder in die Flotationseinheit 7 zurückgeführt wird. Das Permeat aus der Mikrofiltrationseinheit wird einer Umkehrosmoseeinheit 11 zugeführt und in ein Permeat und in ein Retentat aufgetrennt. Das Permeat der Umkehrosmose 11 wird in den Systemtank zurückgeführt. Das Konzentrat aus der Umkehrosmoseeinheit 11 wird einem Verdampfer 12 zugeführt, wobei die flüchtigen Bestandteile nach Kondensieren wieder in den Systemtank 2 zurückgeführt werden und die nicht flüchtigen Bestandteile aus dem System entfernt werden. Bei der in der Figur 1 dargestellten Ausführungsform wird das erfindungsgemäße Verfahren auf einen Teilstrom des Lackumlaufwassers einer üblichen Lackieranlage angewendet. Dies hat den Vorteil, daß übliche Anlagen mit einem minimalen Aufwand umgerüstet werden können und relativ einfach ein Gleichgewichtszustand bezüglich der Konzentration gelöster bzw. kolloidaler Bestandteile im Kabinenumlaufwasser eingestellt werden kann.

Ein weiterer Vorteil des vorliegenden Verfahrens liegt darin, daß nun auch ein Wasser geringerer Reinheitsqualität als Ergänzungswasser dem Spritzkabinenumlaufwasser zugesetzt werden kann, was den Betrieb solcher Anlagen deutlich verbilligt. Ein weiterer Vorteil dieses Verfahrens liegt darin, daß es sehr einfach veränderten Verhältnissen angepaßt werden kann, indem das Verhältnis des Teilstroms, der direkt von der Fest-Flüssig-Trenneinheit 7 in den Systemtank 2 zurückgeführt wird und dem Teilstrom, der über das erfindungsgemäße Verfahren geführt wird, eingestellt wird.

Zur Verdeutlichung der Wirksamkeit des erfindungsgemäßen Verfahrens werden folgende Beispiele angegeben:

### Beispiel 1

Ein Umlaufwasser aus einer industriellen Lackieranlage mit Spritzkabinen mit Auswaschung wurde entsprechend des oben dargestellten Verfahrens über eine Mikrofiltrationseinheit (Multikanalelement mit Al₂O₃ -Membran Porengröße 0,1 µm) und einer Umkehrosmoseeinheit (Polyamidmembran mit einem NaCl-Rückhalt von größer 99,5%) geleitet. Tabelle 1 gibt die Qualität des Umlaufwassers und die Qualität des Permeats aus der Umkehrosmosestufe an.

**Tabelle I**

| Parameter | | Vor Behandlung | und danach | Abbau in % |
|---|---|---|---|---|
| pH-Wert | | 6,9 | 6,8 | |
| Leitwert | in µS/cm | 6810 | 44 | 99,3 |
| Chlorid | in ppm | 546 | 4,4 | 99,2 |
| Sulfat | in ppm | 3016 | <150 | 95,1 |
| Festkörper | in % | 1,6 | 0,06 | 96,3 |
| CSB, | in ppm0₂ | 28000 | <150 | 99,5 |

### Beispiel 2

Das Verfahren, wie in Beispiel 1 dargestellt, wurde mit dem Umlaufwasser einer anderen industriellen Lackieranlage wiederholt. Die Ergebnisse sind in Tabelle II zusammengefaßt

**Tabelle II**

| Parameter | | Vor Behandlung | und danach | Abbau in % |
|---|---|---|---|---|
| pH-Wert | | 6,06 | 6,75 | |
| Leitwert | in µS/cm | 7600 | 30 | 99,61 |
| Chlorid | in ppm | 1100 | 5 | 99,55 |
| Sulfat | in ppm | 3170 | 29,5 | 99,07 |
| Festkörper | in % | 1,6 | 0,06 | 96,3 |
| CSB, | in ppm0₂ | 19936 | 30,8 | 99,85 |

Die in den Tabelle I und II wiedergegebenen Ergebnisse zeigen deutlich, daß mit Hilfe des erfindungsgemäßen Verfahrens die Stoffe, die in gängigen Spritzwasserkreisläufen aufkonzentriert werden und die eingangs beschriebenen Probleme verursachen, weitgehend entfernt werden können. Hieraus wird ersichtlich, daß bei gängigen Lackieranlagen durch Einsatz des erfindungsgemäßen Verfahrens ohne große Änderungen und Investitionsaufwand sowohl die Kosten für die Aufbereitung verbrauchter Kabinenumlaufwässer reduziert werden können, als auch durch Einstellung einer niedrigen Salzkonzentration im Umlaufwasser die Korrosionsprobleme deutlich verringert werden können und auch durch Herabsetzung des Anteils organischer Bestandteile im Umlaufwasser die Emission organischer Stoffe sowie die biologische Kontamination deutlich herabgesetzt werden kann. Erst der Einsatz des erfindungsgemäßen Verfahrens macht es möglich, das Umlaufwasser für Spritzkabinen mit Naßauswaschung in einem geschlossenen Kreislauf zu führen.

## Patentansprüche

1. Verfahren zur Aufbereitung des Umlaufwassers aus Spritzkabinen (1) mit Naßauswaschung durch:
(a) Zuführen zumindest eines Teils des Umlaufwassers zu einer Umkehrosmosestufe (11),
(b) Auftrennen des Umlaufwassers in ein Retentat und in ein Permeat in der Umkehrosmosestufe (11),
(c) Auftrennen des Retentats aus der Umkehrosmose in einer Verdampfereinheit (12) in einen Feststoffanteil und in einen flüchtigen Anteil,
(d) Kondensieren des flüchtigen Anteils aus Stufe (c),
(e) Verwertung des Permeats aus Stufe (b), des Feststoffanteils aus Stufe (c) und des Kondensats aus Stufe (d).

2. Verfahren nach Anspruch 1,
dadurch gekennzeichnet, daß
der Umkehrosmosestufe (11) eine Filtrationsstufe vorgeschaltet wird, in der das Umlaufwasser in ein Retentat und in ein Permeat aufgetrennt wird, und das Permeat der Umkehrosmosestufe (11) zugeführt wird.

3. Verfahren nach Anspruch 2,
dadurch gekennzeichnet,
daß in der Filtrationsstufe eine Partikelfiltrationsmembran, vorzugsweise eine poröse Mikrofiltrationsmembran mit einer Porengröße von 0,05 µm - 5µm verwendet wird.

4. Verfahren nach Anspruch 2,
dadurch gekennzeichnet, daß
in der Filtrationsstufe eine Ultrafiltrationsmembran mit einer Ausschlußgrenze von 200 bis 500.000 Da, vorzugsweise von 1000 bis 250.000 Da, verwendet wird.

5. Verfahren nach einem der vorstehenden Ansprüche
dadurch gekennzeichnet, daß
in der Umkehrosmosestufe (11) eine Membran verwendet wird, die Kochsalz zu mindestens 95 Gew.-%, vorzugsweise zu mindestens 98 Gew.-% zurückhält.

6. Verfahren nach einem der vorstehenden Ansprüche
dadurch gekennzeichnet, daß
die Umkehrosmose mehrstufig durchgeführt wird.

7. Verfahren nach einem der vorstehenden Ansprüche
dadurch gekennzeichnet, daß
das Permeat aus der Umkehrosmosestufe (11) und das Kondensat aus der Verdampferstufe (12) zusammengeführt und gemeinsam verwertet werden, vorzugsweise in den Umlaufwasserkreislauf zurückgeführt werden.

8. Verfahren nach einem der Ansprüche 1-6
dadurch gekennzeichnet, daß
das Permeat aus der Umkehrosmosestufe (11) in den Umlaufwasserkreislauf zurückgeführt wird und das Kondensat aus der Verdampferstufe (12) getrennt verwertet wird.

9. Verfahren zur Kreislaufführung des Wassers aus Spritzkabinen (1) mit Naßauswaschung durch:
(a) Zuführen des mit Lackbestandteilen und Salzen beladenen Wassers aus der Spritzkabine (1) in einen Systemtank (2),
(b) Ableiten eines Gemisches von Wasser und koagulierter Lackbestandteile von der Flüssigkeitsoberfläche aus dem Systemtank (2) in eine Fest-Flüssig-Trenneinheit (7),
(c) Zurückführen einer Wasserfraktion, die im wesentlichen frei von koagulierten Lackbestandteilen ist, aus dem unteren Bereich des Systemtanks (2) in die Spritzkabine (1),
dadurch gekennzeichnet, daß
die wäßrige Phase aus der Fest-Flüssig-Trenneinheit (7)zumindest teilweise dem Verfahren gemäß den Ansprüchen 1 - 8 unterzogen wird, wobei das Permeat aus der Umkehrosmosestufe (11) und/oder das Kondensat aus der Verdampfereinheit (12) in den Systemtank (2) zurückgeführt wird.
